# EUROPÄISCHE PATENTANMELDUNG

(11) **EP 1 610 147 A1**
(43) Veröffentlichungstag der Anmeldung: **28.12.2005**
(21) Anmeldenummer: 05104469.1
(22) Anmeldetag: 25.05.2005
(51) Int. Cl.: G01S 7/03, H01P 11/00

(54) **Single-Chip Radar für Kraftfahrzeug-Anwendungen**

(30) Priorität: 22.06.2004 DE 102004030132; 21.10.2004 DE 102004051276
(71) Anmelder: ROBERT BOSCH GMBH, 70442 Stuttgart (DE)
(72) Erfinder: Voigtländer, Klaus, 73117, Wangen (DE); Thiel, Michael, 71229, Leonberg (DE); Lucas, Bernhard, 74354, Besigheim (DE); Hildebrandt, Juergen, 73235, Weilheim (DE); Hauk, Joachim, 71272, Renningen-Malmsheim (DE); Detlefsen, Wolfgang, 31141, Hildesheim (DE); Olbrich, Herbert, 71277, Rutesheim (DE)

(57) **Zusammenfassung**

Es wird ein Radarsensor zur Ermittlung des Abstands und der Relativgeschwindigkeit von Objekten innerhalb des Sensorerfassungsbereichs vorgeschlagen, der Mikrowellenstrahlung aussendet und an den Objekten reflektierte Teilstrahlungen empfängt, wobei die Schaltungselemente des Radarsensors auf einem gemeinsamen Substrat integriert sind. Hierbei kann das Substrat ein Silizium-Germanium(SiGe)-Substrat, ein Silizium-Germanium-Karbid(SiGeC)-Substrat oder ein SiliziumKarbid(SiC)-Substrat ist.

## Beschreibung

Die vorliegende Erfindung betrifft einen Radarsensor zur Ermittlung des Abstands und der Relativgeschwindigkeit von Objekten innerhalb des Sensorserfassungsbereichs, wobei Mikrowellenstrahlung ausgesendet und an Objekten reflektierte Teilstrahlungen empfangen werden und wobei die Schaltungselemente des Radarsensors auf einen gemeinsamen Substrat integriert sind. Hierbei kann das Substrat ein Silizium-Germanium(SiGe)-Substrat, ein Silizium-Germanium-Karbid(SiGeC)-Substrat oder ein Silizium-Karbid(SiC)-Substrat sein.

### Stand der Technik

Aus der Veröffentlichung "A small, light radar sensor and control unit for adaptive cruise control" von Olbrich, Beez, Lucas, Mayer und Winter, veröffentlicht auf der SAE International Congress and Exposition, Detroit, 23.-26. Februar 1998 ist ein Radarsensor für Kraftfahrzeuganwendungen bekannt, der mittels Radarstrahlung den Abstand und die Relativgeschwindigkeit vorherfahrender Fahrzeuge ermittelt und eine automatische Längsregelung des Fahrzeugs durchführt. Hierzu sind Schaltungsteile des Gesamtsystems auf einzelnen Leiterplatten aufgebracht, wodurch die Nachteile entstehen, dass die einzelnen Leiterplatten miteinander kontaktiert werden müssen, dass der Einbau der Vielzahl an Leiterplatten in das Gehäuse mit Schwierigkeiten hinsichtlich der Platzausnutzung verbunden ist, sowie dass diese Herstellungsart teuer ist, da mehrere Leiterplatten hergestellt werden müssen.

### Kern und Vorteile der Erfindung

Der Kern der vorliegenden Erfindung ist es, einen Radarsensor bereitzustellen, der einen geringen Bauraum aufweist, in dem sämtliche Schaltungselemente des Radarsensors auf einem gemeinsamen Substrat integriert werden und hierdurch eine preisgünstige Herstellung, ein einfacher Abgleich aller Komponenten nach erfolgtem Zusammenbau, ein äußerst flacher Bauraum, die Möglichkeit der Mitintegration digitaler Schaltungen in Verbindung mit analogen Hochfrequenzschaltungen, sowie die Möglichkeit einer geringeren Temperaturdrift der Bauelemente ermöglicht wird, da alle Bauelemente auf dem Schaltungsträger in etwa die gleiche Temperatur aufweisen. Erfindungsgemäß wird dieses durch die Merkmale des unabhängigen Anspruchs gelöst. Vorteilhafte Weiterbildungen und Ausgestaltungen ergeben sich aus den Unteransprüchen.

Vorteilhafterweise ist das Substrat ein Silizium-Germanium(SiGe)-Substrat, ein Silizium-Germanium-Karbid(SiGeC)-Substrat oder ein Silizium-Karbid(SiC)-Substrat. Diese Substrattechnologien ermöglichen zum einen eine Realisation digitaler Schaltungen, zum anderen eine parallele Realisierung analoger Hochfrequenzschaltungen im Mikrowellenfrequenzbereich.

Weiterhin ist es vorteilhaft, dass die Schaltungselemente eine Kombination von einem oder mehreren der folgenden Schaltungsteile umfasst:
- Grundwellenoszillator,
- harmonischer Vervielfacher
- Modulator
- Frequenzregelung mittels einer Phasenregelschleife (PLL) oder einer Frequenzregelschleife (FLL),
- Zwischenfrequenzverstärker,
- Leistungsverstärker,
- Phasenschieber,
- Amplitudensteller,
- Leistungssteller,
- Mischer,
- harmonischer Mischer,
- Eingangsverstärker,
- Zwischenfrequenzverstärker,
- AC-gekoppelter Verstärker,
- DC-gekoppelter Verstärker,
- Analog-Digital-Wandler,
- Signalverarbeitungshardware.
   Weiterhin ist es vorteilhaft, dass für jeden Sende-/Empfangskanal eine Patchantenne vorgesehen ist.
   Weiterhin ist es vorteilhaft, dass für jeden Sende- bzw. Empfangskanal mehrere Patchantennen vorgesehen sind.
   Vorteilhafterweise sind eines oder mehrere der Schaltungsteile
- Antennen,
- dielektrische Resonator oder
- Quarz zur Frequenzregelung
   außerhalb des gemeinsamen Substrats angeordnet sind.

Weiterhin ist es vorteilhaft, dass der Sensor zur Detektion vorherfahrender Fahrzeuge in einem Kraftfahrzeug eingesetzt wird, mittels dem eine adaptive Abstands- und Geschwindigkeitsregelung durchführbar ist.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in den Zeichnungen.

### Zeichnungen

Nachfolgend werden Ausführungsbeispiele der Erfindung anhand von Zeichnungen erläutert. Es zeigen
- Figur 1: ein erstes Ausführungsbeispiel einer erfmdungsgemäßen Vorrichtung,
- Figur 2: ein zweites Ausführungsbeispiel der erfindungsgemäßen Vorrichtung,
- Figur 3: ein drittes Ausführungsbeispiel der erfindungsgemäßen Vorrichtung,
- Figur 4: ein detailliertes Blockschaltbild einer Ausführungsform der erfindungsgemäßen Vorrichtung und
- Figur 5: ein weiteres, detailliertes Blockschaltbild einer Ausführungsform der erfindungsgemäßen Vorrichtung.

### Beschreibung von Ausführungsbeispielen

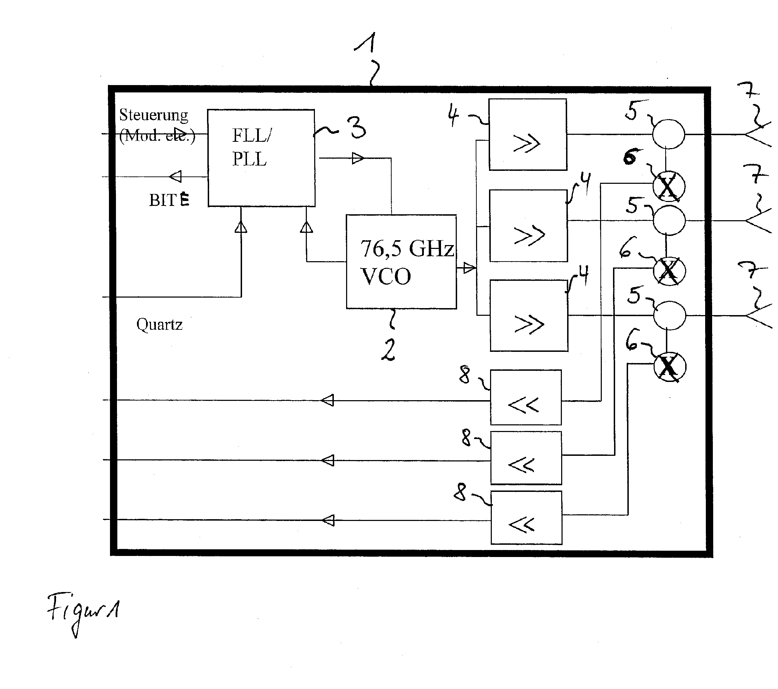

In Figur 1 ist ein Trägersubstrat 1 dargestellt, das beispielsweise in Silizium-Germanium-, Silizium-Germanium-Karbid oder Silizium-Karbid ausgeführt sein kann. Auf diesem Trägersubstrat 1 sind Schaltungselemente 2 bis 8 angeordnet, die zur Erzeugung, Aussendung sowie zum Empfang von Mikrowellenstrahlung notwendig sind. Hierzu ist ein spannungsgesteuerter Grundwellenoszillator 2 vorgesehen, dessen Schwingungsfrequenz von einer Frequenzregeleinrichtung 3 gesteuert wird, wobei diese Frequenzregeleinrichtung 3 als Phasenregelschleife PLL oder als Frequenzregelschleife FLL ausgeführt sein kann. Diese Frequenzregeleinrichtung 3 wird beispielsweise von einem Mikroprozessor oder einem Funktionsgenerator angesteuert, wodurch die Frequenzregeleinrichtung 3 eine Steuerspannung generiert, mittels der der Oszillator 2 ein Sendesignal erzeugt, das beispielsweise rampenförmig variiert werden kann. Das Ausgangssignal dieses Oszillators 2 wird auf Sendeverstärker 4 ausgegeben, wobei im dargestellten Beispiel ein dreistrahliger Radarsensor dargestellt ist, so dass für jeden Kanal ein eigner Sendeverstärker 4 vorgesehen ist. Nachdem die Signale durch die Sendeverstärker 4 verstärkt wurden, werden diese auf Ringhybride 5 ausgegeben, die als Sende-/Empfangsmultiplexer arbeiten, so dass zum Senden und Empfangen der Mikrowellenstrahlen pro Kanal nur eine Antenne notwendig ist. Das Sendesignal wird durch die Ringhybride 5 an Antennen 7 ausgegeben, die die Mikrowellensignale abstrahlen sowie an ebenfalls mit den Ringhybriden 5 verbundenen Ringmischer 6 ausgeben. Die ausgesandte Mikrowellenstrahlung wird an Objekten im Sensorerfassungsbereich reflektiert und diese reflektierten Teilwellen mittels der Antennen 7 empfangen und auf die Ringhybride 5 ausgeben. Die Empfangssignale der Antennen 7 werden durch die Ringhybride 5 ebenfalls an die Mischer 6 ausgegeben, denen zusätzlich das Sendesignal der Sendeverstärkerausgänge 4 zugeführt werden. In den Mischern 6 werden die Sende-und Empfangssignale gemischt und an nachgeordnete Empfangsverstärker 8 ausgegeben, wobei für jeden Empfangskanal wiederum ein separater Empfangsverstärker vorgesehen ist. In den Empfangsverstärkern 8 werden die Zwischenfrequenzsignale der Mischer 6 vorverstärkt, um diese mittels weiterer Schaltungselemente außerhalb des Trägersubstrats 1 weiterzuverarbeiten.

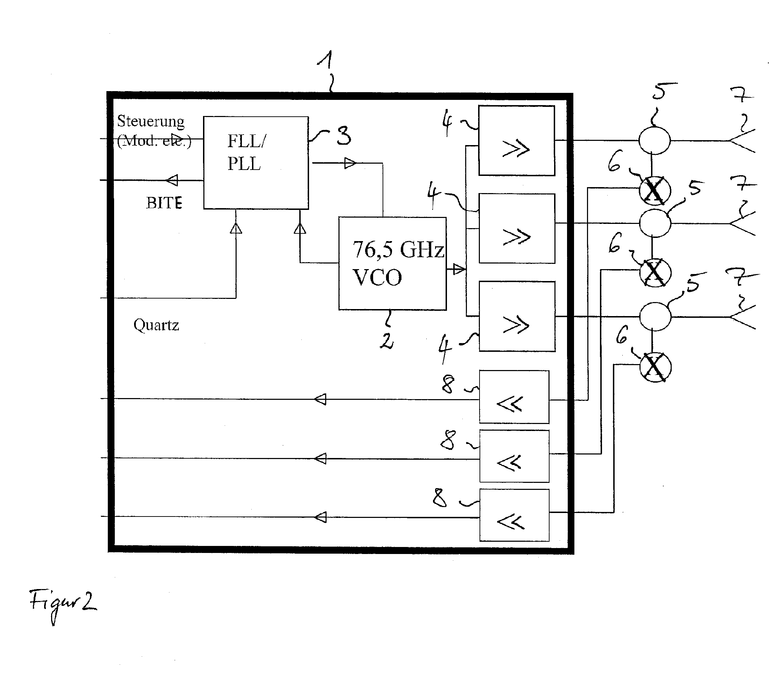

In Figur 2 ist ein weiteres Ausführungsbeispiel der in Figur 1 beschriebenen Schaltung dargestellt, wobei in diesem Fall die Ringhybride 5, die Mischer 6 sowie die Antennen 7 außerhalb des Trägersubstrates 1 angebracht sind, so dass auf dem Trägersubstrat 1 in diesem Ausführungsbeispiel lediglich der Oszillator 2, die Frequenzregeleinrichtung 3, die Sendeverstärker 4 sowie die Empfangsverstärker 8 untergebracht sind.

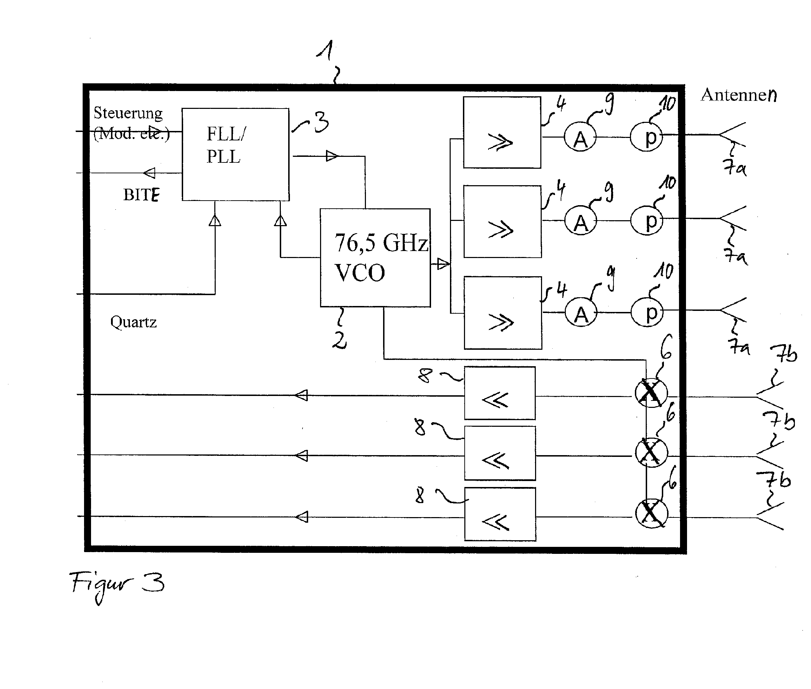

In Figur 3 ist eine Weiterentwicklung der in Figur 1 beschriebenen Schaltung dargestellt, die aufgrund der zusätzlichen hinzugekommenen Schaltungselemente eine Strahlformung sowie eine elektronische Strahlschwenkung der Sende- und Empfangsantennencharakteristiken ermöglichen. Hierzu ist wiederum das Trägersubstrat 1 dargestellt, auf dem der Oszillator 2 sowie die Frequenzregeleinrichtung 3 dargestellt sind. Der Oszillator 2 gibt ein Sendesignal an mehrere Sendeverstärker 4 aus, wobei in diesem Fall ein dreistrahliger Radarsensor dargestellt ist, so dass für jeden Kanal ein eigener Sendeverstärker 4 vorgesehen ist. Das verstärkte Sendesignal wird vom Sendeverstärker 4 an einen Amplitudensteller 9 ausgegeben, in dem die Amplitudenstärke des jeweiligen Sendekanals in Abhängigkeit von Steuersignalen, die den Amplitudenstellern 9 zuführbar sind, eingestellt werden. Das amplitudengeformte Signal, das am Ausgang der Amplitudenstellern 9 abgreifbar ist, wird an Phasenschieber 10 ausgegeben, wobei für jeden Kanal wiederum ein eigener Phasenschieber 10 vorgesehen ist. Die Phasenschieber 10 ermöglichen, dass in Abhängigkeit von ihnen zugeführten Steuersignalen die einzelnen Sendesignale der einzelnen Kanäle in zueinander unterschiedlichen Phasenlagen mittels der Sendeantennen 7a ausgesandt werden. Dies ermöglicht, dass auf elektronische Art und Weise die Sende- und Empfangscharakteristik geschwenkt werden kann und damit beispielsweise bei Kurvenfahrten lediglich die gekrümmte, eigene Fahrspur bezüglich vorausfahrender Fahrzeuge erfasst werden kann. Die an Objekten reflektierten Teilwellen werden mittels Empfangsantennen 7b empfangen und der Schaltung 1 zugeführt, wo sie auf Mischer 6 gegeben werden, wobei für jeden Empfangskanal wiederum eine eigene Empfangsantenne 7b sowie ein eigener Mischer 6 vorgesehen ist. Den Mischern 6 wird zusätzlich das Sendesignal des Oszillators 2 zugeführt, so dass am Ausgang der Mischer 6 ein Zwischenfrequenzsignal, das aus dem gesendeten Signal und dem empfangenen Signal erzeugt wird, abgreifbar ist. Dieses Zwischenfrequenzsignal wird von den Ausgängen der Mischer 6 an Empfangsverstärker 8 ausgegeben, wobei auch in diesem Fall wieder für jeden Kanal ein eigener Empfangsverstärker 8 vorgesehen ist. Die Ausgangssignale der Empfangsverstärker 8 werden einer weiteren Signalverarbeitung zugeführt, die im vorliegenden Beispiel außerhalb des Trägersubstrats 1 vorgesehen ist.

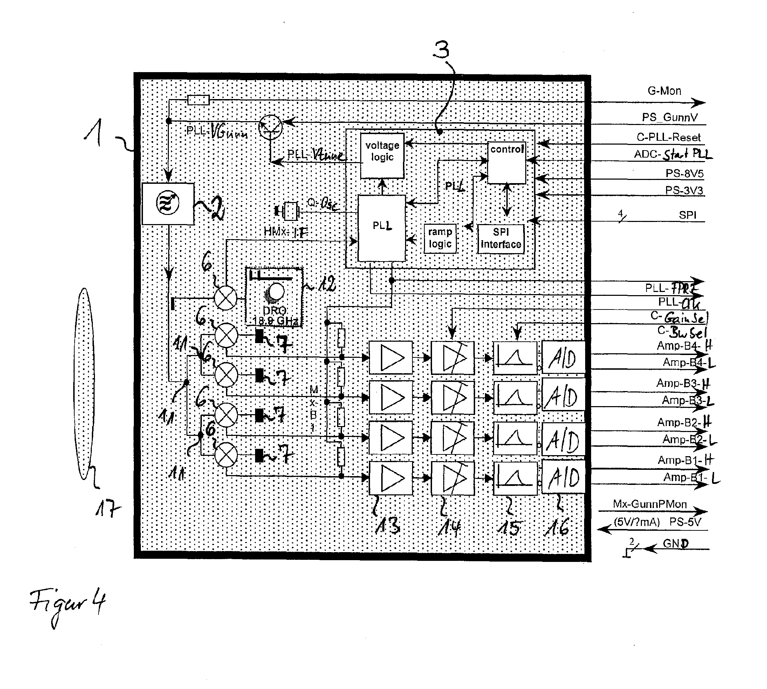

In Figur 4 ist eine Schaltungseinrichtung dargestellt, auf der sämtliche Schaltungselemente des Radarsensors auf einem Trägersubstrat 1 ausgeführt sind. Es ist wiederum die Frequenzregeleinrichtung 3 dargestellt, die im vorliegenden Fall als Phasenregelschleife PLL ausgeführt ist. Diese wird durch extern zugeführte Signale sowie einen eigenen Quarz-Oszillator (Q-Osc) angesteuert. Das Ausgangssignal dieser Frequenzregelschleife PLL-Vtune wird mittels eines Verstärkers verstärkt und als Signal PLL-VGunn auf einen spannungsgesteuerten Oszillator 2 ausgegeben. In diesem spannungsgesteuerten Oszillator 2 wird ein Sendesignal aufbereitet, das gemäß der Steuersignale der Frequenzregeleinrichtung 3 beispielsweise in der Frequenz modulierbar ist. Dieser Grundwellenoszillator kann beispielsweise als Gunndiode ausgeführt sein, die innerhalb eines Hohlleiters angeordnet ist, wobei die im Hohlleiter erzeugten, elektromagnetischen Wellen mittels eines Hohlleiter-Streifenleiter-Transformators auf eine Streifenleitung ausgekoppelt werden, die zu den Leistungsteilern 11 führt. Mittels der Leistungsteiler 11 wird das erzeugte Sendesignal auf mehrere Kanäle aufgeteilt, beispielsweise wie im dargestellten Beispiel mittels drei 3dB-Leistungsteiler auf insgesamt 4 Sende- und Empfangskanäle verzweigt. Das aufgeteilte Sendesignal wird Mischern 6 zugeführt, wobei diese auf das Sendesignal keine verändernde Wirkung haben, so dass die Sendesignal auf die Antennen 7 geleitet werden, wo die Sendesignale abgestrahlt werden. Außerhalb des Trägersubstrats ist hierzu eine dielektrische Linse 17 angeordnet, die die Sendestrahlung so formt, dass die gewünschte Richtcharakteristik des Radarsensors entsteht. Die ausgesandte Strahlung wird an Objekten im Sensorerfassungsbereich reflektiert und die reflektierten Teilwellen wiederum durch die dielektrische Linse 17 auf die als Sende- und Empfangsantennen wirkenden Antennen 7 fokussiert. Die Empfangsantennen 7 empfangen die somit zugeführten Signale und führen diese wiederum den Mischern 6 zu, wo die Empfangssignale mit den Sendesignalen zu Zwischenfrequenzsignalen gemischt werden und an nachgeordnete Eingangsverstärker 13 weitergeleitet werden, wobei für jeden Kanal wiederum ein eigener Eingangsverstärker 13 vorgesehen ist. Die Eingangsverstärker 13 geben ihr Ausgangssignal an Zwischenfrequenzverstärker 14 weiter, die in ihrer Verstärkung durch externe Steuersignale regelbar sind, so dass die Zwischenfrequenzsignale in ihrer Amplitude so verstärkbar sind, dass sie für die nachfolgende Verarbeitung ausreichend stark sind. Die Ausgangssignale der regelbaren Zwischenfrequenzverstärker 14 werden anschließend auf Empfangsfilter 15 gegeben, die beispielsweise die Funktion von Range-Filtern bzw. Anti-Aliasing-Filtern haben. Mittels dieser Filter 15 ist es möglicht, nur einen gewünschten Entfernungsbereich der ausgesandten und empfangenen Mikrowellenstrahlung auszuwerten sowie Aliasingsprektren, die durch die Mischung in den Mischern 6 entstanden sind, auszufiltern. Die Ausgangssignale dieser Empfangsfilter 15 werden nachfolgend auf Analog-Digital-Wandler 16 gegeben, mittels denen die analogen und aufbereiteten Zwischenfrequenzsignale digitalisiert werden, so dass diese nachfolgend, beispielsweise durch einen Mikroprozessor auswertbar sind. Alternativ ist es weiterhin möglich, den Mikroprozessor zusätzlich auf den Trägersubstrat 1 vorzusehen, so dass auch die Auswertung mittels Fouriertransformation und Trackingalgorithmen auf dem Trägersubstrat 1 erfolgen würde. Aus dem Sendesignal, das der Oszillator 2 ausgibt, wird weiterhin mittels eines Leitungskopplers ein Sendesignalanteil ausgekoppelt und einem fünften Mischer 6 zugeführt, dem zusätzlich das Signal eines Referenzoszillators 12, der beispielsweise als dielektrischer Resonator ausgeführt sein kann, zugeführt wird. Durch die Mischung des Referenzoszillatorssignal mit dem Sendesignal kann man die erzeugte Sendefrequenz des Oszillators 2 kontrollieren und dieses Signal HMx-IF wiederum der Frequenzregeleinrichtung 3 zuführen, wo dieses Signal ausgewertet wird und beispielsweise die Linearität der frequenzmodulierten Sendesignale korrigiert werden kann.

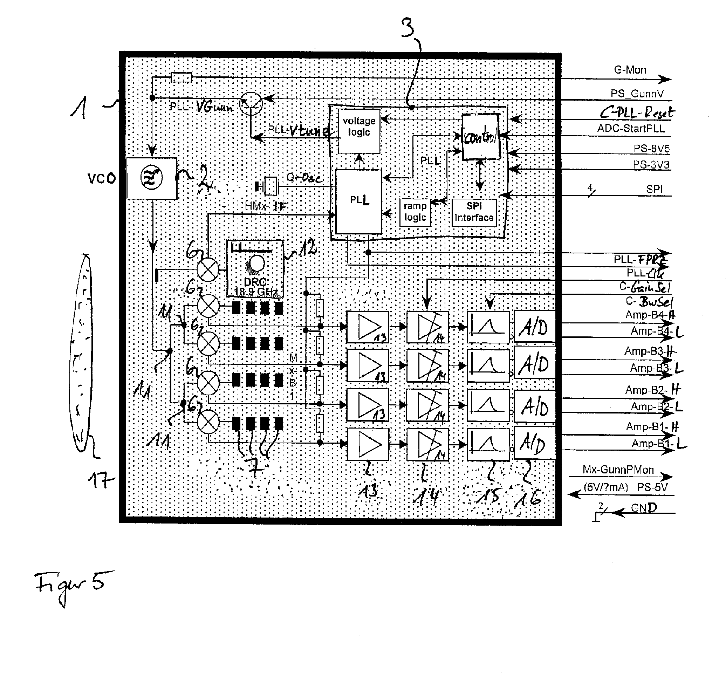

In Figur 5 ist ein ähnliches Ausführungsbeispiel dargestellt, wie es in Figur 4 beschrieben wurde. Es ist wiederum das Trägersubstrat 1 dargestellt, auf dem die Frequenzregeleinrichtung 3 vorgesehen ist, der Grundwellenoszillator 2 vorgesehen ist, der durch die Frequenzregeleinrichtung 3 gesteuert wird und dessen Ausgangssignal mittels Leistungsteilern 11 auf Mischer 6 ausgegeben wird. Auch in dieser Ausführungsform wird wiederum das Sendesignal mittels eines Leitungskopplers abgezweigt und mit dem Signal eines Referenzoszillators 12, der wiederum als dielektrischer Resonator ausgeführt sein kann, in einem fünften Mischer 6 gemischt und der Frequenzregeleinrichtung 3 zugeführt, womit die Sendemodulation und Sendefrequenz überwacht und gegebenenfalls korrigiert werden kann. Das Sendesignal, das über die Leistungsteiler 11 an die Mischer 6 der vier Einzelkanäle ausgegeben wird, wird nachfolgend an Arrayantennen 7 ausgegeben, wobei für jeden Kanal mehrere Patchantennen vorgesehen sind. Hierdurch entsteht ein Antennenarray zum Senden und Empfangen der Strahlung, das zum einen durch die Anzahl der Antennen pro Kanal sowie durch die Anzahl der Kanäle insgesamt bestimmt wird. Die von den Sende- und Empfangsantennen abgestrahlten, elektromagnetischen Wellen können wiederum mit einer dielektrischen Linse 17 parallelisiert werden und in die gewünschte Richtcharakteristik des Radarsensors geformt werden. Die empfangenen Teilwellen werden wiederum mittels der dielektrischen Linse 17 auf die Patchantennen fokussiert, von wo aus die Empfangssignale der Patchantennen an die Mischer 6 ausgegeben werden. In den Mischern 6 wird für jeden Kanal das Sendesignal mit dem Empfangssignal zu einem Zwischenfrequenzsignal abgemischt, das wiederum über Eingangsverstärker 13, regelbare Zwischenfrequenzverstärker 14, Empfangsfilter 15 an Analog-Digital-Wandler 16 ausgebbar ist, in denen das analoge Zwischenfrequenzsignal in digitale Signale gewandelt wird und an eine nachgeordnete, sowohl auf dem Trägersubstrat 1 als auch extern dieses Trägersubstrats 1 anordenbaren Mikroprozessor ausgebbar ist.

Gemäß einer weiteren Ausgestaltung kann die in Figur 5 dargestellte Schaltung auch derart ausgebildet sein, dass eines oder mehrere der Schaltungsteile Antennen (7), dielektrischer Resonator (12) oder Quarz zur Frequenzregelung außerhalb des gemeinsamen Substrats (1) angeordnet sind.

## Patentansprüche

1. Radarsensor zur Ermittlung des Abstands und der Relativgeschwindigkeit von Objekten innerhalb des Sensorerfassungsbereichs, der Mikrowellenstrahlung aussendet und an den Objekten reflektierte Teilstrahlungen empfängt, **dadurch gekennzeichnet, dass** die Schaltungselemente des Radarsensors (2 bis 16) auf einem gemeinsamen Substrat (1) integriert sind.

2. Radarsensor nach Anspruch 1, **dadurch gekennzeichnet, dass** das Substrat (1) ein Silizium-Germanium(SiGe)-Substrat, ein Silizium-Germanium-Karbid(SiGeC)-Substrat oder ein Silizium-Karbid(SiC)-Substrat ist.

3. Radarsensor nach Anspruch 1 oder 2, **dadurch gekennzeichnet, dass** die Schaltungselemente (2 bis 16) eine Kombination von einem oder mehreren der folgenden Schaltungsteile
- Grundwellenoszillator (2),
- Harmonischenvervielfacher ,
- Modulator,
- Frequenzregelung (2) mittels einer Phasenregelschleife (PLL) oder einer Frequenzregelschleife (FLL),
- Zwischenfrequenzverstärker,
- Leistungsverstärker (4),
- Phasenschieber (10),
- Amplitudensteller (9),
- Leistungsteiler (11),
- Mischer (6),
- Harmonischenmischer,
- Eingangsverstärker (13),
- Zwischenfrequenzverstärker (14),
- AC-gekoppelter Verstärker,
- DC-gekoppelter Verstärker,
- Analog-Digital-Wandler (16),
- Signalverarbeitungshardware
umfasst.

4. Radarsensor nach einem der Ansprüche 1 bis 3, **dadurch gekennzeichnet, dass** für jeden Sende- bzw. Empfangskanal eine Patchantenne (7) vorgesehen ist.

5. Radarsensor nach einem der Ansprüche 1 bis 3, **dadurch gekennzeichnet, dass** für jeden Sende- bzw. Empfangskanal mehrere Patchantennen (7) vorgesehen sind.

6. Radarsensor nach einem der vorhergehenden Ansprüche, **dadurch gekennzeichnet, dass** eines oder mehrere der Schaltungsteile
- Antennen (7),
- dielektrische Resonator (12) oder
- Quarz zur Frequenzregelung außerhalb des gemeinsamen Substrats (1) angeordnet sind.

7. Radarsensor nach einem der vorhergehenden Ansprüche, **dadurch gekennzeichnet, dass** der Sensor zur Detektion vorherfahrender Fahrzeuge in einem Kraftfahrzeug eingesetzt wird.
